# EUROPÄISCHE PATENTSCHRIFT

(11) **EP 1 142 279 B1**
(45) Veröffentlichungstag und Bekanntmachung des Hinweises auf die Patenterteilung: **22.09.2004**
(21) Anmeldenummer: 99963357.1
(22) Anmeldetag: 01.12.1999
(51) Int. Cl.: H04M 3/08

(54) **VERFAHREN ZUM ERFASSEN VON IN WENIGSTENS EINER ELEKTRISCHEN EINHEIT, INSBESONDERE EINER VERMITTLUNGSTECHNISCHEN EINRICHTUNG, AUFTRETENDEN FEHLERN**
METHOD FOR DETECTING ERRORS OCCURRING IN AT LEAST ONE ELECTRIC UNIT, ESPECIALLY A SWITCHING ORIENTED UNIT
PROCEDE DE DETECTION D'ERREURS SE PRODUISANT DANS AU MOINS UNE UNITE ELECTRIQUE, EN PARTICULIER D'UN DISPOSITIF DE COMMUNICATION

(30) Priorität: 21.12.1998 EP 98124403
(43) Veröffentlichungstag der Anmeldung: 10.10.2001
(73) Patentinhaber: SIEMENS AKTIENGESELLSCHAFT, 80333 München (DE)
(72) Erfinder: STEINIGKE, Klaus, D-81369 München (DE)
(86) Internationale Anmeldenummer: PCT/EP1999/009365
(87) Internationale Veröffentlichungsnummer: WO 2000/038395

(56) Entgegenhaltungen:
- WO-A-93/20527
- DE-A- 2 544 929
- DE-A- 2 803 002
- DE-A- 4 302 908
- GB-A- 1 502 415

## Beschreibung

Die Erfindung bezieht sich auf ein Verfahren zum Erfassen von in wenigstens einer elektrischen Einheit, insbesondere einer vermittlungstechnischen Einrichtung auftretenden Fehlern, insbesondere von nicht verifizierbaren transienten Fehlern, mittels eines Fehlerzählers, der bei Auftreten eines Fehlers um einen bestimmten ersten Zählwert in einer ersten Zählrichtung zählt und der zu festgelegten Zeitpunkten jeweils um einen zweiten Zählwert, der grösser oder kleiner als der erste Zählwert ist oder der gleich dem ersten Zählwert ist, in einer zur ersten Zählrichtung entgegengesetzten zweiten Zählrichtung in dem Fall zählt, dass die betreffende Einheit innerhalb einer zwischen zwei solchen Zeitpunkten gegebenen Zeitspanne fehlerfrei gearbeitet hat, wobei bei Erreichen bzw. Überschreiten eines festgelegten Zählschwellwertes in der genannten ersten Zählrichtung durch den betreffenden Fehlerzähler eine Alarmmeldung ausgelöst wird.

Bei einem Verfahren der vorstehend genannten Art werden mit Hilfe des erwähnten Fehlerzählers, der im englischen als leaky bucket counter bezeichnet wird, vor allem nicht verifizierbare transiente Fehler, das heißt, sporadisch auftretende Fehler, die nicht bestimmten Ursachen zugeordnet werden können, erfaßt. Das Auftreten solcher Fehler führt bei einer praktischen Ausführungsform dazu, dass in der erwähnten ersten Zählrichtung jeweils um zwei gezählt wird, und in der zweiten Zählrichtung wird zu den erwähnten festgelegten Zeitpunkten jeweils um eins gezählt. Dadurch wird erreicht, dass nur sporadisch auftretende Fehler nicht zur sofortigen Alarmauslösung führen, dass allerdings solche gehäuft auftretenden Fehler die betreffende Alarmauslösung bewirken. Wenn andererseits die betreffenden Fehler nicht mehr auftreten, wird der Fehlerzähler in der genannten zweiten Zählrichtung bis zum Erreichen einer bestimmten Zählerstellung zählen, in der dann keine weiteren Aktionen mehr zu treffen sind.

Aus vorstehendem geht somit hervor, dass erst bei Erreichen bzw. Überschreiten des genannten festgelegten Zählschwellwertes in der genannten ersten Zählrichtung eine Alarmmeldung ausgelöst wird, die dann zu Fehlersuch- und Fehlerbehebungsmaßnahmen führt, was allerdings zuweilen als zu spät betrachtet wird.

Es ist nun auch schon ein Verfahren zum Erfassen von in wenigstens einer elektrischen Einheit, insbesondere einer vermittlungstechnischen Einrichtung auftretenden Fehlern, bekannt (WO 93/20527), bei dem entsprechend der oben betrachteten Vorgehensweise gearbeitet wird. Dabei spielen hauptsächlich drei Überwachungsparameter eine Rolle, nämlich ein sogenannter Störschritt (disturbance step),die Höhe einer unteren Grenze (floor) und die Höhe einer oberen Grenze (ceiling). Der erwähnte Störschritt (disturbance step) stellt dabei diejenige Größe dar, um die ein vorhandener Fehlerähler schrittweise hochzählt. Erst bei Erreichen des oberen Grenzwertes des Fehlerzählers (ceiling C) werden Maßnahmen getroffen.

Es sind ferner ein Verfahren und eine Schaltungsanordnung zur Ermittlung von kritischen Fehlern bekannt (DE 43 02 908), die in einem System, wie z.B. in einem Kommunikationssystem auftreten können. Dazu werden Fehlermeldungen nach vorgegebenen Kriterien sortiert, wobei jedem berücksichtigten Fehlerereignis ein einem Zeitintervall zugehöriger Schwellwert (Anzahl Fehlerereignis pro Zeiteinheit) zugeordnet wird, nach dessen Überschreiten ein Fehler als kritisch eingestuft und gemeldet wird. Falls die Anzahl der innerhalb eines Zeitintervalls auftretenden Fehlerereignisses kleiner als der Schwellwert ist, wird der Wert, der zu Beginn des nächsten Zeitintervalls in dem Ereigniszähler abgelegt wird, unter Berücksichtigung der während des letzten Zeitintervalls ermittelten Anzahl von Fehlerereignissen festgelegt. Dadurch werden schwerwiegende Fehler erfaßt, deren Häufigkeit unterhalb des Schwellwertes liegen.

Es ist auch schon eine indirekt gesteuerte Vermittlungsanlage bekannt (DE 28 03 002), bei der zum Erkennen von Fehlern Einrichtungen vorgesehen sind, die Plausibilitätsprüfungen ausnutzen, und bei der sporadisch auftretende Fehler nach Überschreiten einer einstellbaren Schwelle signalisiert werden.

Es ist schließlich auch schon bekannt (GB-A-1 502 415), bei einer Fernsprechvermittlungseinrichtung eine Qualitätsüberwachung bezüglich Verbindungsversuche durchzuführen. Zu diesem Zweck sind zwei Zähler vorgesehen, die zur Zählung von.Verbindungsversuchen dienen. Der eine Zähler, als Einer-Zähler bezeichnet, zählt dabei bis 100 und gibt nach Zählung von 100 Verbindungsversuchen einen Zählimpuls an den anderen Zähler ab, der zehn Zählstufen aufweist und der als Hunderter-Zähler bezeichnet sei; mit beiden Zählern können somit 1000 Verbindungsversuche gezählt werden. Ferner sind zwei Fehlerzähler vorgesehen, mit denen fehlerhafte Verbindungsversuche gezählt werden. Der eine Fehlerzähler, der als Mittelwert-Fehlerzähler bezeichnet ist, kann beispielsweise bis 25 zählen; er erfährt eine Rücksetzung auf Null, wenn der Hunderter-Zähler seine Zählstellung Null erreicht, also 1000 Verbindungsversuche gezählt sind. Der andere Fehlerzähler, der als Spitzenwert-Fehlerzähler bezeichnet ist, kann beispielsweise bis 40 zählen und erfährt eine Rücksetzung auf Null, wenn der Einer-Zähler seine Zählerstellung Null erreicht, also 100 Verbindungsversuche gezählt sind. Damit gibt der Mittelwert-Fehlerzähler ein Ausgangssignal ab, wenn 2,5% der Verbindungsversuche fehlerhaft waren, und der Spitzenwert-Fehlerzähler gibt ein Ausgangssignal ab, wenn 40% Verbindungsversuche fehlerhaft waren. Im ersteren Fall wird lediglich eine bloße Vorwarnung über das Vorliegen von fehlerhaften Verbindungsversuchen abgegeben, die keine dringenden Gegenmaßnahmen erfordern. Im zweiten Fall wird jedoch eine ernste Warnung abgegeben, die die dringende Durchführung von Gegenmaßnahmen erfordert.

Damit sieht dieser bekannte Stand der Technik also die Einführung von zwei Warnungen vor, allerdings erfolgt keinerlei Abschaltung der in die Qualitätsüberwachung einbezogenen Fernsprechvermittlungseinrichtung bei Erreichen einer bestimmten Fehlerschwelle.

Der Erfindung liegt nun die Aufgabe zugrunde, einen Weg zu zeigen, wie bei einem Verfahren der eingangs genannten Art zum einen auf relativ einfache Weise bereits im Zuge des Erfassens von Fehlern eine gewisse Vorwarnung ergehen kann, ohne dass sofort die jeweils gestörte Einheit bzw. die diese enthaltende Einrichtung abzuschalten ist, und wie zum anderen nach Abgabe einer solchen Vorwarnung auf relativ einfache Weise die Zeitspanne verlängert werden kann, während der gegebenenfalls wieder auftretende Fehler erfaßt werden können.

Gelöst wird die vorstehend aufgezeigte Aufgabe bei einem Verfahren der eingangs genannten Art erfindungsgemäß dadurch, dass bei Erreichen bzw. Überschreiten eines unterhalb des genannten festgelegten Zählschwellwertes liegenden weiteren Zählschwellwertes eine erste Alarmmeldung ausgelöst wird, durch die lediglich das Auftreten von Fehlern in der betreffenden Einheit gemeldet wird, dass erst bei Erreichen bzw. Überschreiten des darüber liegenden genannten einen Zählschwellwertes eine zweite Alarmmeldung in Verbindung mit einer Abschaltung der jeweiligen Einheit ausgelöst wird und dass bei Erreichen lediglich des genannten weiteren Zählschwellwertes und anschließendem Ausbleiben von Fehlern bzw. bei Unterschreiten des betreffenden weiteren Zählschwellwertes infolge Ausbleibens von Fehlern die Zeitspanne zwischen jeweils zwei der genannten Zeitpunkte verlängert wird, zu denen der genannte Fehlerzähler in der zweiten Zählrichtung zählt.

Die Erfindung zeichnet sich durch den Vorteil aus, dass auf besonders einfache Weise eine Vorwarnung durch den Fehlerzähler infolge des Erfassens von in wenigstens einer elektrischen Einheit, insbesondere einer vermittlungstechnischen Einrichtung auftretenden Fehlern gegeben werden kann, so dass bereits frühzeitig eine Beobachtung der betreffenden Einheit und ggf. das Treffen von besonderen Maßnahmen ermöglicht ist, durch die eine Erkennbarkeit der betreffenden Fehler bzw. der Ursachen für das Auftreten der betreffenden Fehler ermöglicht wird. Dies ist insbesondere bei den nicht verifizierbaren transienten Fehlern von Vorteil, die nur sporadisch auftreten und die durch die üblichen Fehlerprüfroutinen, welche in elektrischen Einheiten üblicherweise vorhanden sind, nicht erkannt werden können. Die betreffende Beobachtung kann dabei in vorteilhafter Weise über eine relativ lange Einsatzdauer des Fehlerzählers für die Erfassung von ggf. wieder auftretenden Fehlern verlängert werden, ohne dass dessen Zählkapazität zu ändern ist.

Zweckmäßigerweise wird die Abschaltung der jeweiligen Einheit nach einer festgelegten weiteren Zeitspanne wieder aufgehoben, und der Fehlerzähler wird in eine zwischen den beiden genannten Zählschwellwerten liegende Prüfzählstellung eingestellt. Diese Maßnahme bringt den Vorteil mit sich, dass durch sie eine nach einer gewissen Zeit beispielsweise infolge von Selbstheilungseffekten elektrischer Bauelemente wieder voll funktionsfähige Einheit wirksam geschaltet werden kann, ohne dass deren Austausch durchgeführt zu werden brauchte. Zum anderen ermöglicht diese Maßnahme in vorteilhafter Weise die Bestimmbarkeit von gewissen erfaßten Fehlern, die durch die vorstehend erwähnten Selbstheilungseffekte nicht verschwinden.

Vorzugsweise wird als Prüfzählstellung eine Zählstellung gewählt, bei der wenigstens ein weiterer Fehler innerhalb der genannten festgelegten einen Zeitspanne erneut einen Alarm auslöst und zur Abschaltung der jeweiligen Einheit führt. Dadurch wird in vorteilhafter Weise sichergestellt, dass bei weiterhin vorhandener Fehlerhaftigkeit der betreffenden überwachten Einheit diese schnellstmöglich wieder abgeschaltet wird.

Zweckmäßigerweise erfolgt der Zählbetrieb des Fehlerzählers in der zweiten Zählrichtung solange, bis der betreffende Fehlerzähler eine bestimmte Zählstellung, insbesondere die Zählerstellung Null erreicht hat. Dadurch ergibt sich der Vorteil eines besonders einfachen Betriebs des Fehlerzählers.

Anhand von Zeichnungen wird die Erfindung nachstehend an beispielhaften Verfahrensweisen näher erläutert.
- Fig. 1: veranschaulicht in einem Zeitdiagramm Zählzustände eines eine elektrische Einheit überwachenden Fehlerzählers bei verschiedenen Zuständen einer durch diesen überwachten Einheit.
- Fig. 2: veranschaulicht in einem Zeitdiagramm verschiedene Ausgangssignale des Fehlerzählers mit den in Fig. 1 veranschaulichten Zählzuständen.
- Fig. 3: veranschaulicht in einem Zeitdiagramm Zählzustände eines eine elektrische Einheit überwachenden Fehlerzählers bei Auftreten anderer Fehlerkonstellationen als gemäß Fig. 1 angenommen.
- Fig. 4: veranschaulicht in einem Zeitdiagramm verschiedene Ausgangssignale des Fehlerzählers mit den in Fig. 3 veranschaulichten Zählzuständen.

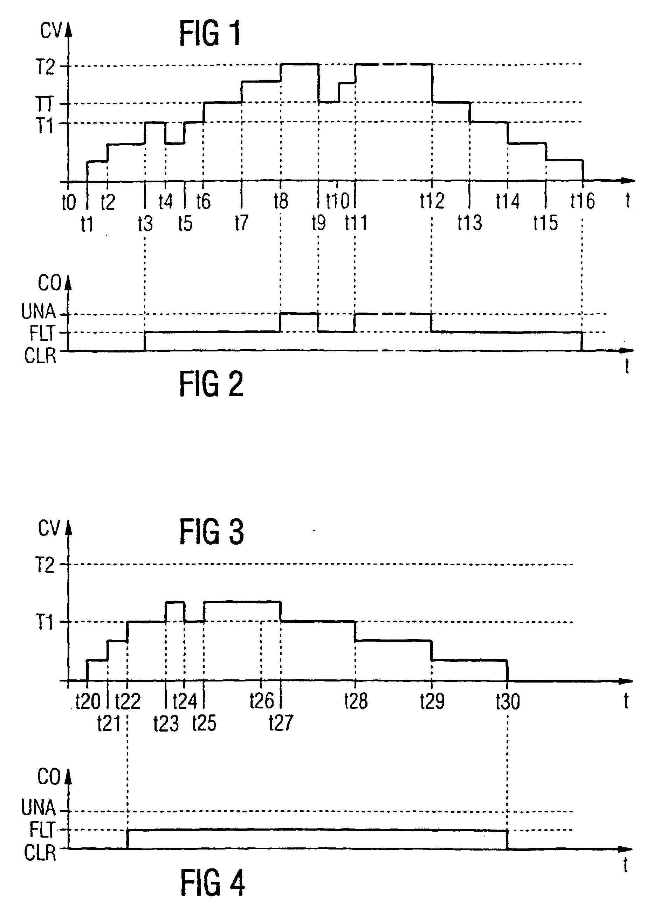

Fig. 1 zeigt in einem Zeitdiagramm über eine Zeitachse t (Abszisse) aufgetragen verschiedene Zählzustände (Ordinate CV) eines Fehlerzählers, mit dem in wenigstens einer elektrischen Einheit, insbesondere einer vermittlungstechnischen Einrichtung auftretende Fehler erfaßt werden. Bei diesen Fehlern handelt es sich insbesondere um sporadisch auftretende Fehler, also um transiente Fehler, die nicht verifizierbar sind. Der Fehlerzähler ist im vorliegenden Fall ein Vorwärts-Rückwärts-Zähler, der bei Auftreten eines Fehlers um einen bestimmten ersten Zählwert in einer ersten Zählrichtung, beispielsweise in seiner Vorwärts-Zählrichtung zählt und der zu festgelegten Zeitpunkten, worauf noch näher eingegangen wird, jeweils um einen zweiten Zählwert, der größer oder kleiner als der erste Zählwert oder der auch gleich dem ersten Zählwert sein kann, in einer zweiten Zählrichtung, der Rückwärts-Zählrichtung, in dem Fall zählt, daß innerhalb der genannten Zeitspanne zwischen zwei der genannten Zeitpunkte die überwachte Einheit fehlerfrei gearbeitet hat. Im vorliegenden Fall sind die Zählwerte in der Vorwärts-Zählrichtung und in der Rückwärts-Zählrichtung jeweils gleich groß; die betreffenden Zählwerte betragen hier beispielsweise jedoch 1.

Gemäß Fig. 1 befindet sich der Fehlerzähler zum Zeitpunkt t0 in seiner Ausgangszählerstellung, die normalerweise die Zählerstellung Null ist. Zu den Zeitpunkten t1, t2 und t3 möge jeweils ein Fehler durch den Fehlerzähler erfaßt werden, woraufhin der Fehlerzähler um drei Zählwerte in Vorwärts-Zählrichtung gezählt hat. Damit ist zum Zeitpunkt t3 ein erster Zählschwellwert T1 des betreffenden Fehlerzählers erreicht. Auf das Erreichen dieses ersten Zählschwellwertes T1 hin gibt der betreffende Fehlerzähler, wie dies in dem Zeitdiagramm gemäß Fig. 2 veranschaulicht ist, eine Alarmmeldung ab bzw. löst eine solche aus. Dies ist in Fig. 2 durch den längs der Zeitachse t (Abszisse) eingetragenen Signalsprung im Zählerausgangssignal CO (Ordinatenrichtung) vom Ausgangssignalpegel CLR (Zählerstellung 0) zum Ausgangssignalpegel FLT (fehlerhafter Zustand) veranschaulicht.

Zum Zeitpunkt t4 als dem Beginn-Zeitpunkt für eine Rückwärtszählung führt der Fehlerzähler sodann einen Zählvorgang in seiner Rückwärts-Zählrichtung aus, wenn zu diesem Zeitpunkt kein weiterer Fehler festgestellt worden ist. Der nächste Zeitpunkt, zu dem ein solcher Zählvorgang in der Rückwärts-Zählrichtung erfolgen würde, ist der Zeitpunkt t6. Innerhalb der Zeitspanne von t4 bis t6 ist jedoch, wie in Fig. 1 gezeigt, zum Zeitpunkt t5 ein weiterer Fehler aufgetreten, und zum Zeitpunkt t6 ist überdies ein noch weiterer Fehler aufgetreten. Dadurch hat der Fehlerzähler stets um einen Zählwert in seiner Vorwärts-Zählrichtung weitergezählt.

Innerhalb der Zeitspanne von t6 bis t7 ist ein weiterer Fehler festgestellt worden, und zwar zum Zeitpunkt t7. Entsprechendes gilt auch für die Zeitspanne von t7 bis t8, so daß der betreffende Fehlerzähler jeweils um einen weiteren Zählwert in seiner Vorwärts-Zählrichtung weitergezählt hat. Ein Rückwärtszählen konnte somit zu den betreffenden Zeitpunkten nicht stattfinden. Damit ist zum Zeitpunkt t8 ein zweiter Zählschwellwert T2 erreicht. Wie aus dem zugehörigen Zeitdiagramm gemäß Fig. 2 ersichtlich ist, führt dies dazu, daß im Zählerausgangssignal CO ein weiterer Signalpegelsprung vom Ausgangssignalpegel FLT zum Ausgangssignalpegel UNA (Alarmmeldung und Abschaltung der überwachten Einheit) erfolgt.

Während bei Erreichen des ersten Zählschwellwertes T1 gemäß Fig. 1 zunächst nur eine Alarmmeldung als gewissermaßen vorläufige Warnung ausgelöst wurde, wird nunmehr zum Zeitpunkt t8 mit Erreichen des zweiten Zählschwellwertes T2 eine zweite Alarmmeldung in Verbindung mit einer Abschaltung der überwachten Einheit ausgelöst.

Zum Zeitpunkt t9 gemäß Fig. 1, der zeitlich in der Größenordnung von beispielsweise einer Stunde nach dem Zeitpunkt t8 liegen kann, wird der Fehlerzähler auf eine Prüfzählstellung TT zurückgestellt, die zwischen den beiden Zählschwellwerten T1 und T2 liegt. Diese Prüfzählstellung ist hier so festgelegt, daß erst das Auftreten zweier aufeinanderfolgender Fehler innerhalb der genannten festgelegten einen Zeitspanne, an deren Anfang (t10) und an deren Ende (t11) der Fehlerzähler jeweils um den genannten Zählwert in seiner Vorwärts-Zählrichtung zählt und dann eine erneute Alarmauslösung und Abschaltung der überwachten Einheit bewirkt. Gemäß Fig. 1 ist dieser Fall des Auftretens zweier aufeinanderfolgender Fehler innerhalb der erwähnten Zeitspanne angenommen; zum Zeitpunkt t10 und 11 sind solche Fehler jeweils aufgetreten. Damit ist wieder der Zählschwellwert T2 erreicht, und es erfolgt eine erneute Alarmauslösung in Verbindung mit einer Abschaltung der überwachten Einheit. Innerhalb der Zeitspanne von t9 bis t11 ist, wie in Fig. 2 angedeutet, die betreffende Einheit wieder in Betrieb gesetzt, wobei lediglich eine vorläufige Alarmmeldung (Ausgangssignalpegel FLT) erfolgt.

Zu einem Zeitpunkt t12, der beispielsweise eine Stunde nach dem Zeitpunkt t11 liegen kann, wird der Fehlerzähler wieder in die Prüfzählstellung TT zwischen den beiden Zählschwellwerten T1 und T2 zurückgesetzt. Zugleich damit wird die Abschaltung der überwachten Einheit zurückgenommen, was in Fig. 2 entsprechend angedeutet ist. Zu den Zeitpunkten t13, t14, t15 und t16 zählt der Fehlerzähler um den bestimmten Zählwert jeweils in seiner Rückwärts-Zählrichtung, da annahmegemäß innerhalb der Zeitspannen t12 bis t13 bzw. t13 bis t14 bzw. t14 bis t15 bzw. t16 keine Fehler mehr auftreten. Damit erreicht der Fehlerzähler zum Zeitpunkt t16 seine Ausgangszählerstellung Null, womit die Alarmmeldung FLT gemäß Fig. 2 wieder zurückgenommen wird (siehe den Übergang vom Ausgangssignalpegel FLT zum Ausgangssignalpegel CLR zum Zeitpunkt t16).

Fig. 3 veranschaulicht in einem ähnlichen Zeitdiagramm wie Fig. 1 über eine Zeitachse t (Abszisse) verschiedene Zählzustände CV (Ordinate) des Fehlerzählers, mit dem wenigstens eine elektrische Einheit, insbesondere einer vermittlungstechnischen Einrichtung auf das Auftreten von Fehlern, und zwar insbesondere von nicht verifizierbaren transienten Fehlern, überwacht wird. Die verschiedenen Zählzustände sind dabei längs einer Zeitachse t aufgetragen, und in der Ordinatenrichtung CV des Diagramms gemäß Fig. 3 sind wieder die beiden Zählschwellwerte T1 und T2 eingetragen. Dabei ist angenommen, daß zu Zeitpunkten t20, t21 und t22 jeweils ein Fehler vom Fehlerzähler erfaßt wird, so daß dieser dreimal in seiner Vorwärts-Zählrichtung um einen bestimmten Zählwert zählt. Zum Zeitpunkt t22 ist dann der Zählschwellwert T1 erreicht, was zur Auslösung einer Fehlermeldung führt, wie dies in dem Zeitdiagramm gemäß Fig. 4 durch den Signalpegelsprung von CLR nach FLT veranschaulicht ist. Dieses Zeitdiagramm veranschaulicht über eine Zeitachse t verschiedene Ausgangssignalpegel CLR, FLT und UNA (in der Ordinatenrichtung), die das Fehlerzählerausgangssignal CO annehmen kann.

Die Arbeitsweise des erwähnten Fehlerzählers kann hier zunächst die gleiche sein wie im Falle der Verhältnisse gemäß Fig. 1. Dies bedeutet, daß zum Zeitpunkt t24 als dem Rückwärts-Zählbeginn des betreffenden Fehlerzählers ein Rückwärts-Zählvorgang vorgenommen wird, falls nicht zu diesem Zeitpunkt noch ein weiterer Fehler aufgetreten ist. Gemäß Fig. 3 ist jedoch zum Zeitpunkt t24 kein solcher weiterer Fehler aufgetreten, so daß dies zum Zählen des Fehlerzählers um einen Zählwert in seiner Rückwärts-Zählrichtung führt.

In Abweichung von den in Fig. 1 erläuterten Verhältnissen ist gemäß Fig. 3 jedoch vorgesehen, daß bei Erreichen lediglich des betrachteten ersten Zählschwellwertes T1 und anschließendem Ausbleiben von Fehlern bzw. bei Unterschreiten dieses Zählschwellwertes T1 infolge des Ausbleibens von Fehlern die Zeitspanne zwischen jeweils zwei der Zeitpunkte verlängert wird, zu denen der Fehlerzähler in seiner Rückwärts-Zählrichtung zählt. Diese Zeitspanne reicht gemäß Fig. 3 beispielsweise vom Zeitpunkt t24 bis zum Zeitpunkt t26. Sie ist damit länger als die entsprechende Zeitspanne von z.B. t12 bis t13 bzw. t13 bis t14 bzw. t14 bis t15 bzw. t15 bis t16. Im vorliegenden Falle tritt jedoch zum Zeitpunkt t25 innerhalb der gerade erwähnten Zeitspanne ein weiterer Fehler auf, der wieder dazu führt, daß der Fehlerzähler in seiner Vorwärts-Zählrichtung zählt. Damit kommt der Zeitpunkt t26 für ein Rückwärtszählen des Fehlerzählers nicht mehr zum Tragen, da inzwischen zum Zeitpunkt t25 ein weiterer Fehler aufgetreten ist.

Wenn innerhalb der Zeitspanne von t25 bis t27 kein weiterer Fehler aufgetreten ist, wird zum Zeitpunkt t27 der Fehlerzähler um einen Zählwert in seiner Rückwärts-Zählrichtung zählen. Die Zeitspanne von t25 bis t27 ist dabei genauso lang wie die zuvor erwähnte Zeitspanne von t24 bis t26.

Wenn innerhalb der Zeitspannen von t27 bis t28 bzw. von t28 bis t29 bzw. von t29 bis t30 jeweils keine weiteren Fehler auftreten, erfolgen weitere Rückzählvorgänge des Fehlerzählers, so daß dieser zum Zeitpunkt t30 seine Ausgangszählerstellung Null wieder erreicht hat. Zum Zeitpunkt t30 hört gemäß Fig. 4 auch die Abgabe der Alarmmeldung (Ausgangssignalpegel FLT) wieder auf.

Bezogen auf die in Fig. 1 dargestellten Verhältnisse sind also gemäß Fig. 3 die Zeitspannen des Rückwärtszählens des Fehlerzählers verlängert. Von dieser "Sicherungsmaßnahme" wird hier lediglich Gebrauch gemacht, wenn der Zählzustand bzw. die Zählerstellung des Fehlerzählers lediglich den ersten Zählschnellwert erreicht bzw. überschreitet und anschließend die überwachte Einheit fehlerfrei arbeitet. Dabei kann im übrigen in Abweichung von den zuvor in Verbindung mit Fig. 3 erläuterten Verhältnissen so vorgegangen werden, daß die gegenüber Fig. 1 verlängerte Rückzähl-Zeitspanne ab dem Zeitpunkt t24 beibehalten wird, auch wenn zum Zeitpunkt t25 noch ein Fehler aufgetreten ist.

Abschließend sei noch angemerkt, daß im Zuge der vorstehenden Ausführungen jeweils Alarmmeldungen bei Erreichen der Zählschwellwerte T1 bzw. T2 ausgelöst worden sind. Es dürfte einzusehen sein, daß solche Alarmanmeldungen auch erst dann ausgelöst werden können, wenn die betreffenden Zählschwellwerte T1 bzw. T2 durch entsprechende Zählerstellungen des Fehlerzählers überschritten sind.

Überdies ist noch darauf hinzuweisen, daß die zwischen den beiden Zählschwellwerten T1 und T2 in Fig. 1 festgelegte Prüfzählstellung TT in Abweichung von den oben erläuterten Verhältnissen auch so festgelegt sein kann, daß nach der Aufhebung der Abschaltung der überwachten Einheit diese bei Auftreten lediglich eines weiteren Fehlers innerhalb der erwähnten festgelegten einen Zeitspanne unter erneuter Alarmauslösung wieder, und zwar ggf. endgültig, abgeschaltet wird.

## Patentansprüche

1. Verfahren zum Erfassen von in wenigstens einer elektrischen Einheit, insbesondere einer vermittlungstechnischen Einrichtung auftretenden Fehlern, insbesondere von nicht verifizierbaren transienten Fehlern, mittels eines Fehlerzählers, der bei Auftreten eines Fehlers um einen bestimmten ersten Zählwert in einer ersten Zählrichtung zählt und der zu festgelegten Zeitpunkten jeweils um einen zweiten Zählwert, der grösser oder kleiner als der erste Zählwert ist oder der gleich dem ersten Zählwert ist, in einer zur ersten Zählrichtung entgegengesetzten zweiten Zählrichtung in dem Fall zählt, dass die betreffende Einheit innerhalb einer zwischen zwei solchen Zeitpunkten gegebenen Zeitspanne fehlerfrei gearbeitet hat,
wobei bei Erreichen bzw. Überschreiten eines festgelegten Zählschwellwertes in der genannten ersten Zählrichtung durch den betreffenden Fehlerzähler eine Alarmmeldung ausgelöst wird,
**dadurch gekennzeichnet, dass** bei Erreichen bzw. Uberschreiten eines unterhalb des genannten festgelegten Zählschwellwertes (T2) liegenden weiteren Zählschwellwertes (T1) eine erste Alarmmeldung ausgelöst wird, durch die lediglich das Auftreten von Fehlern in der betreffenden Einheit gemeldet wird, dass erst bei Erreichen bzw. Überschreiten des darüber liegenden genannten festgelegten Zählschwellwertes (T2) eine zweite Alarmmeldung in Verbindung mit einer Abschaltung der jeweiligen Einheit ausgelöst wird und dass bei Erreichen lediglich des genannten weiteren Zählschwellwertes (T1) und anschließendem Ausbleiben von Fehlern bzw. bei Unterschreiten des betreffenden weiteren Zählschwellwertes (T1) infolge Ausbleibens von Fehlern die Zeitspanne (z.B. t27 - t28) zwischen jeweils zwei der genannten Zeitpunkte verlängert wird, zu denen der genannte Fehlerzähler in der zweiten Zählrichtung zählt.

2. Verfahren nach Anspruch 1, **dadurch gekenn-zeichnet, daß** die Abschaltung der jeweiligen Einheit nach einer festgelegten weiteren Zeitspanne wieder aufgehoben und der Fehlerzähler in eine zwischen den beiden genannten Zählschwellwerten (T1, T2) liegende Prüfzählstellung (TT) eingestellt wird.

3. Verfahren nach Anspruch 2, **dadurch gekennzeichnet, dass** als Prüfzählstellung (TT) eine Zählstellung gewählt wird, bei der wenigstens ein weiterer Fehler innerhalb der genannten festgelegten einen Zeitspanne erneut einen Alarm auslöst und zur Abschaltung der jeweiligen Einheit führt.

4. Verfahren nach einem der Ansprüche 1 bis 3, **dadurch gekennzeichnet, daß** der Zählbetrieb des Fehlerzählers in der zweiten Zählrichtung solange erfolgt, bis der betreffende Fehlerzähler eine bestimmte Zählerstellung, insbesondere die Zählstellung Null erreicht hat.

## Claims

1. Method for detection of faults which occur in at least one electrical unit, in particular a switching device, in particular of transient faults which cannot be verified, by means of a fault counter which, when a fault occurs, counts by a specific first counting value in a first counting direction and which, at specific times, in each case counts by a second counting value, which is greater or less than the first counting value, or is equal to the first counting value, in a second counting direction, which is the opposite of the first counting direction, in the situation where the relevant unit has operated without any faults within a time interval provided between two such times,
with an alarm signal being triggered when the relevant fault counter reaches or exceeds a defined counting threshold value in said first counting direction,
**characterized in that** a first alarm signal is triggered on reaching or exceeding a further counting threshold value (T1), which is below said defined counting threshold value (T2) and which signals only the occurrence of faults in the relevant unit, **in that** a second alarm signal is triggered, in conjunction with the respective unit being switched off, only on reaching or exceeding the specific said counting threshold value (T2) which is higher than the former, and **in that** on reaching only said further counting threshold value (T1) and the faults subsequently not being evident, or if the count falls below the relevant further counting threshold value (T1) due to faults not being evident, the time interval (for example t27 - t28) between any two of said times at which said fault counter counts in the second counting direction is lengthened.

2. Method according to Claim 1, **characterized in that** the switching-off of the respective unit is cancelled once again after a defined further time interval, and the fault counter is set to a checking counter position (TT) which is between the two said counting threshold values (T1, T2).

3. Method according to Claim 2, **characterized in that** the checking count position (TT) is chosen to be a count position at which at least one further fault within said defined one time interval triggers another alarm and leads to the respective unit being switched off.

4. Method according to one of Claims 1 to 3, **characterized in that** the fault counter counts in the second counting direction until the relevant fault counter reaches a specific counter position, in particular the zero count position.

## Revendications

1. Procédé pour la détection d'erreurs, en particulier d'erreurs transitoires non vérifiables, qui se produisent dans au moins une unité électrique, en particulier dans un dispositif de la technique des communications, au moyen d'un compteur d'erreurs qui, lors de l'apparition d'une erreur, ajoute une première valeur de comptage dans un premier sens de comptage et qui, à des instants définis, ajoute une deuxième valeur de comptage qui est plus grande ou plus petite que la première valeur de comptage ou qui est identique à la première valeur de comptage dans un deuxième sens de comptage dont le sens est opposé au premier sens de comptage au cas où l'unité concernée a travaillé sans erreur pendant l'intervalle de temps défini entre deux de ces instants,
et au cas où une valeur définie de seuil de comptage est atteinte ou dépassée dans ledit premier sens de comptage par le compteur d'erreur concerné, un message d'alarme est déclenché,
**caractérisé en ce que** lorsqu'une autre valeur de seuil de comptage (T1) qui est située en dessous de ladite valeur de seuil de comptage (T2) fixe est atteinte ou dépassée, un premier message d'alarme est déclenché pour indiquer uniquement l'apparition d'erreurs dans l'unité concernée, **en ce qu'**un deuxième message d'alarme associé à un débranchement de l'unité concernée n'est déclenché que lorsque ladite valeur supérieure de seuil fixe de comptage (T2) est atteinte ou dépassée, et lorsque seule ladite autre valeur de seuil de comptage (T1) est atteinte et qu'ensuite des erreurs sont absentes ou que l'autre valeur de seuil de comptage (T1) n'est plus atteinte parce que des erreurs n'apparaissent plus, l'intervalle de temps (par exemple t27 - t28) entre deux desdits instants auxquels ledit compteur d'erreur compte dans le deuxième sens de comptage est prolongé.

2. Procédé selon la revendication 1, **caractérisé en ce que** le débranchement de l'unité concernée est supprimé après un autre intervalle de temps fixe et **en ce que** le compteur d'erreur est placé dans une position de comptage de vérification (TT) située entre lesdites deux valeurs de seuil de comptage (T1, T2).

3. Procédé selon la revendication 2, **caractérisé en ce que** comme position de comptage de vérification (TT), on sélectionne une position de comptage dans laquelle au moins une autre erreur pendant ledit intervalle de temps fixe déclenche de nouveau une alarme et entraîne le débranchement de l'unité concernée.

4. Procédé selon l'une des revendications 1 à 3, **caractérisé en ce que** le comptage du compteur d'erreur dans le deuxième sens de comptage a lieu jusqu'à ce que le compteur d'erreur concerné ait atteint une position de comptage définie, et en particulier la position de comptage nulle.
